# FASCICULE DE BREVET EUROPEEN

(11) **EP 0 462 294 B1**
(45) Date de publication et mention de la délivrance du brevet: **03.01.1996**
(21) Numéro de dépôt: 90110996.7
(22) Date de dépôt: 11.06.1990
(51) Int. Cl.: H04L 12/64

(54) **Interface pour accès en émission et en réception au support de transmission synchrone d'un réseau de commutation réparti**
Schnittstelle für Zugang als Sender und Empfänger gestützt auf synchroner Übertragung in einem verteilten Netz
Interface for send and receive access to the synchronous transmission medium of a distributed communication network

(30) Priorité: 19.06.1989 FR 8908113
(43) Date de publication de la demande: 27.12.1991
(73) Titulaire: ALCATEL BUSINESS SYSTEMS, F-75008 Paris (FR)
(72) Inventeur: Le Cucq, Gérald, F-78580 Maule (FR); Moulehiawy, Abdelkrim, F-75002 Paris (FR)
(74) Mandataire: Weinmiller, Jürgen

(56) Documents cités:
- EP-A- 0 122 765
- EP-A- 0 173 274
- PATENT ABSTRACTS OF JAPAN vol. 6, no. 92 (P-119)(970) 29 Mai 1982 & JP-A-57 27 331 (NIPPON DENKI)

## Description

La présente invention concerne une interface pour accès en émission et en réception au support de transmission synchrone d'un réseau de commutation réparti.

La présente invention s'applique notamment à un réseau de commutation réparti multiservices apte à commuter des trafics en mode circuit synchrone et en mode paquet synchrone ou asynchrone, et architecturé autour d'un support de transmission partagé dans le temps entre différentes stations, dans lequel :
- le support de transmission est synchrone et structuré en trames répétitives, elles-mêmes structurées en intervalles de temps eux-mêmes structurés en temps-cellules, ces derniers étant dimensionnés pour contenir une entité de communication qui peut être suivant le cas, une cellule en circuit ou une cellule en paquet segmenté,
- un intervalle de temps idéal d'accès au support de transmission en mode paquet est affecté par un système centralisé de gestion de ressources respectivement aux différentes stations communiquant àl'intérieur de ce réseau,
- il est procédé à chaque temps-cellule et pour l'ensemble des stations, à un arbitrage d'accès au support de transmission, afin d'assurer un accès à ce support, suivant des priorités décroissantes, par des cellules en circuit disponibles à cet instant dans toute station, par des cellules en paquets segmentés synchrones disponibles à cet instant dans toute station ayant un intervalle de temps idéal d'accès antérieur à l'intervalle de temps contenant le temps-cellule considéré, par des cellules en paquets segmentés synchrones disponibles à cet instant dans la station ayant pour intervalle de temps idéal d'accès l'intervalle de temps contenant le temps-cellule considéré, par des cellules en paquets segmentés asynchrones disponibles à cet instant dans toute station ayant pour intervalle de temps idéal d'accès un intervalle de temps antérieur à l'intervalle de temps contenant le temps-cellule considéré, par des cellules en paquets segmentés asynchrones disponibles à cet instant dans la station ayant pour intervalle de temps idéal l'intervalle de temps contenant le temps cellule considéré.

La présente invention s'applique plus particulièrement au cas où :
- les temps cellules sont eux-mêmes structurés en temps octets ;
- chaque station constitue un point de concentration de trafic relatif à plusieurs usagers ;
- un temps - octet d'accès au support de transmission est affecté respectivement à différents usagers communiquant en mode circuit à l'intérieur de ce réseau, par le système centralisé de gestion de ressources;
- pour toute station autorisée à l'issue de l'arbitrage, à accéder au support de transmission à un temps-cellule déterminé, il est procédé à une validation successive de ces stations en fonction des différents temps octets affectés aux différents usagers qui leur sont raccordés pour le trafic en mode circuit, ou à une validation d'une seule et même station pour le trafic en mode paquet.

Il est connu, du document EP-A-O 122 765 un dispositif pour accès en émission et en réception au support de transmission synchrone d'un réseau de commutation réparti, ledit réseau étant architecturé autour d'un support de transmission partagé dans le temps entre différentes stations et chaque station comportant des moyens pour déterminer les positions temporelles correspondant aux données à écrire ou à lire sur ledit support. Il est en outre connu, du document Patent Abstracts of Japan vol. 6, n° 92, (P-119) (970), 29 May 1982 & JP-A-57 27331, d'utiliser un couple de mémoires permettant de réaliser une adaptation entre le débit sur un bus de données d'une part, et la vitesse de traitement par un terminal des données à écrire, ou des données lues, sur ce bus.

La présente invention a pour objet une interface pour accès en émission et en réception au support de transmission synchrone d'un réseau de communication réparti, ledit réseau étant architecturé autour d'un support de transmission partagé dans le temps entre différentes stations et chaque station comportant des moyens pour déterminer les positions temporelles correspondant aux données à écrire ou à lire sur ledit support, et ladite interface étant essentiellement caractérisée en ce qu'elle comporte dans chaque station, pour chaque sens de transmission, un couple de mémoires dont l'une accède audit support, respectivement en émission ou en réception, en synchronisme avec la présentation des positions temporelles sur ledit support, tandis que l'autre est respectivement écrite ou lue, sous la commande desdits moyens de détermination de positions temporelles, et vice-versa, et en ce qu'à chaque adresse des mémoires utilisées pour l'accès en émission, ladite adresse correspondant à une position temporelle sur le support de transmission, est stocké un élément binaire supplémentaire pour une validation d'accès audit support, à la position temporelle considérée, cet élément binaire étant écrit sous la commande des moyens de détermination de positions temporelles.

D'autres objets et caractéristiques de la présente invention apparaîtront plus clairement à la lecture de la description suivante d'un exemple de réalisation, faite en relation avec les dessins ci-annexés dans lesquels :
- la figure 1 représente le schéma général d'un exemple de réseau de commutation réparti multiservices utilisant une interface suivant l'invention ;
- la figure 2 illustre un exemple de structuration du support de transmission d'un réseau de commutation réparti multiservices utilisant une interface suivant l'invention, ainsi qu'un exemple d'allocation de trafic sur ce support,
- la figure 3 représente le schéma général d'une station dans un tel réseau,
- la figure 4 représente une interface suivant l'invention dans un tel réseau.

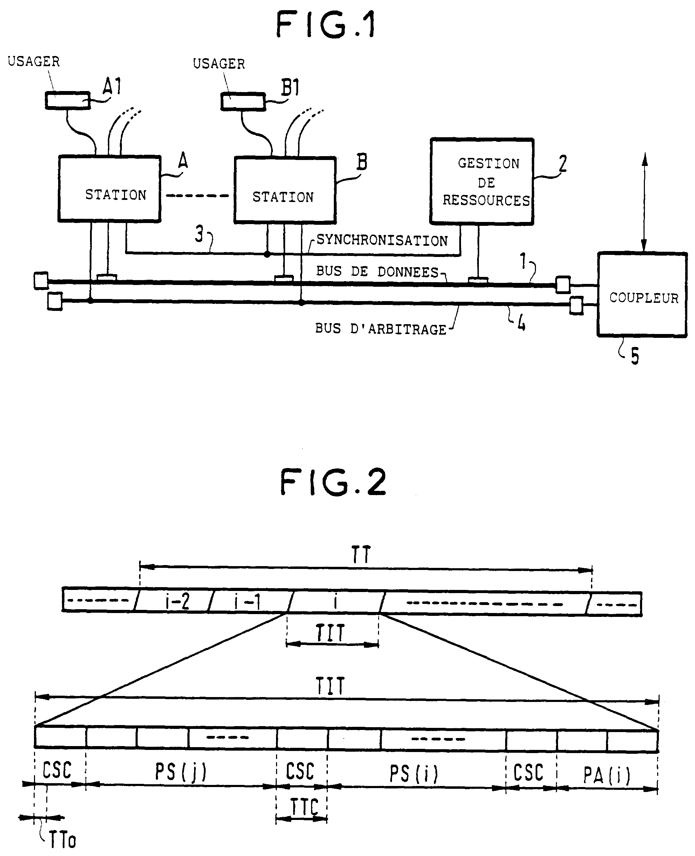

Sur la figure 1 on a représenté un ensemble de "n" stations A, ...B d'un réseau de commutation réparti communiquant entre elles par un support de transmission 1 appelé aussi par la suite bus de données, partagé dans le temps entre différentes stations, chaque station consistant elle même en un point de concentration de trafic provenant de différents usagers A1, A2... B1, B2...

Comme illustré sur la figure 2, ce bus de données est un bus synchrone, structuré en trames répétitives de durée T_{T} elles mêmes structurées en différents intervalles de temps de durée T_{IT}, qui se décomposent à leur tour en différents temps-cellules de durée T_{TC}, se décomposant eux mêmes en différents temps-octets élémentaires de durée T_{TO}.

Chaque temps-cellule est dimensionné de manière à contenir suivant le cas soit une cellule dite en circuit, soit une cellule dite en paquet segmenté.

Les trafics traités par ce réseau peuvent être de plusieurs types :
- en mode circuit synchrone, de débit déterminé et fixe au cours du temps, par exemple 64 kbits/s pour un multiplex téléphonique à32 voies codé suivant le mode MIC, les informations de parole portée par ce multiplex téléphonique constituant lesdites cellules en circuit,
- en mode paquet synchrone de débit varié et variable au cours du temps, ce qui est par exemple le cas d'informations issues de terminaux de télécopie,
- en mode paquet asynchrone, ce qui est par exemple le cas d'informations issues de terminaux informatiques.

On entend par cellules en paquets segmentés,des fragments de paquet tous munis de l'adresse de destination de ce paquet et ayant même dimension qu'une cellule en circuit.

Une cellule en circuit ou un paquet étant eux mêmes constitués en octets, chaque temps-octet est lui-même dimensionné de manière àcontenir un tel octet.

Les différents octets d'une même cellule en circuit sont affectés aux différents usagers du réseau, et par conséquent aux différentes stations auxquelles sont raccordés ces usagers, par un système centralisé de gestion de ressources 2, au gré des apparitions et des disparitions de communications en mode circuit dans ce réseau.

Pour chaque temps-cellule se présentant sur le bus de données les cellules en circuit sont écoulées en priorité, afin d'écouler sans délai ce type de trafic.

Le trafic en mode paquet relatif à une station I est théoriquement écoulé sur un intervalle de temps I_{Ti} de même rang i de trames successives, dit intervalle de temps idéal d'accès de cette station, alloué préalablement à celle-ci par le système centralisé de gestion de ressources 2 en fonction de la capacité du support de transmission, de la capacité nominale déjà allouée aux communications en cours à un instant donné, et de la capacité nominale nécessitée par la station faisant une demande d'accès au réseau à cet instant, de sorte que tous les trafics correspondant à ces capacités nominales puissent être écoulés sans délai.

Une optimisation de rendement du support de transmission est par ailleurs assurée en prévoyant par ailleurs un "débordement" de trafic en mode paquet synchrone issu d'une station, sur des cellules d'intervalles de temps non initialement affectés à cette station, en cas de "pointes" de trafic en mode paquet synchrone par rapport à la capacité nominale allouée, et en prévoyant un "comblement" par du trafic asynchrone, de cellules non occupées par du trafic synchrone, en cas de "creux" de trafic synchrone.

Il est ainsi procédé à chaque temps-cellule et pour l'ensemble des stations, à un arbitrage d'accès au support de transmission, afin d'assurer un accès à ce support, suivant des priorités décroissantes, par des cellules en circuit CSC disponibles à cet instant dans toute station, par des cellules en paquets segmentés synchrones PS (j) disponibles à cet instant dans toute station ayant un intervalle de temps idéal d'accès antérieur à l'intervalle de temps contenant le temps-cellule considéré, par des cellules en paquets segmentés synchrones PS (i) disponibles à cet instant dans la station ayant pour intervalle de temps idéal d'accès l'intervalle de temps contenant le temps-cellule considéré, par des cellules en paquets segmentés asynchrones PA (j) disponibles à cet instant dans toute station ayant un intervalle de temps idéal d'accès antérieur à l'intervalle de temps contenant le temps-cellule considéré, par des cellules en paquets segmentés asynchrones PA (i) disponibles à cet instant dans la station ayant pour intervalle de temps idéal d'accès l'intervalle de temps contenant le temps-cellule considéré.

Par ailleurs, pour toute station autorisée, à l'issue de l'arbitrage, à accéder au support de transmission à un temps-cellule déterminé, il est procédé à une validation successive de ces stations en fonction des différents temps-octets qui leur ont été affectés, pour le cas de trafic en mode circuit, ou à une validation d'une seule et même station tout au long du temps-cellule considéré, pour le cas de trafic en mode paquet.

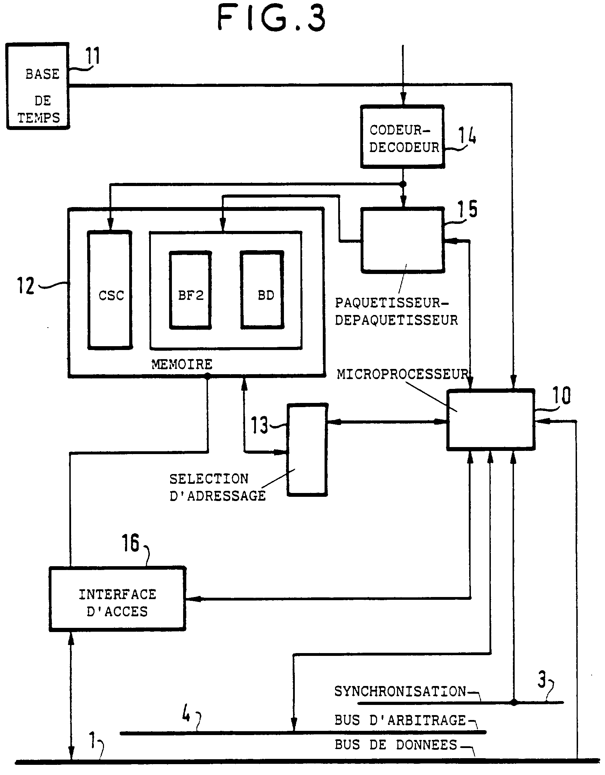

On décrit maintenant, en relation avec la figure 3, le schéma de chacune des stations d'un tel réseau.

Ce schéma est organisé autour d'un microprocesseur 10 qui communique avec un certain nombre d'éléments parmi lesquels :
- une base de temps 11, lui fournissant la fréquence de répétition des temps-octets, temps-cellules, intervalles de temps et trames sur le bus de données,
- une liaison de synchronisation 3 lui fournissant l'intervalle de temps idéal d'accès en émission pour le cas de trafic en mode paquet, ainsi que les temps-octets d'affectation pour le cas de trafic en mode circuit, ces informations étant fournies par le système centralisé de gestion de ressources 2,
- le bus de données 1 lui fournissant sur des cellules dites de signalisation les temps-octets affectés à la station émettrice correspondante dans le cas d'un accès en réception et dans le cas de trafic en mode circuit,
- un bus d'arbitrage 4 commun aux différentes stations,
- une mémoire 12 contenant des registres (ou "buffers") spécialisés par type de trafic, avec laquelle il communique par l'intermédiaire d'un organe de sélection d'adressage 13.

Des données sont inscrites ou lue dans ces buffers par un codeur-décodeur (ou "codec") 14 pour le trafic en mode circuit, ou par un paquettiseur-dépaquettiseur 15 pour le trafic en mode paquet.

Ces deux éléments (codeur-décodeur et paquettiseur-dépaquettiseur) sont bien connus et ne seront donc pas redécrits ici. On rappellera simplement qu'un paquettiseur permet de constituer des données en paquets comportant à la fois des données à transmettre et des informations de signalisation nécessaires à leur acheminement, et qu'un codeur permet d'assembler différents octets de parole issus de différents utilisateurs raccordés à la station considérée, en un multiplex téléphonique MIC, les informations de signalisation étant transmises séparément des informations (ou octets) de parole ; un décodeur et un dépaquettiseur permettent de réaliser les fonctions inverses.

Les informations d'arbitrage appliquées sur le bus d'arbitrage 4 sont relatives au degré de priorité des différents trafics présents dans les buffers détectés occupés de la mémoire 12, cette détection d'occupation étant faite par le microprocesseur 10 via l'organe de sélection d'adressage 13.

L'arbitrage est réalisé par comparaison des informations d'arbitrage appliquées au même instant par différentes stations sur le bus d'arbitrage.

Plus particulièrement cet arbitrage est réalisé par une opération d'écriture sur ce bus, suivie d'une opération de lecture, une éventuelle coïncidence entre les deux informations, écrite puis lue par une station sur le bus d'arbitrage indiquant un réglement du conflit en faveur de cette station. En l'occurence l'écriture sur le bus d'arbitrage étant telle que celui-ci change d'état par application d'un élément binaire "O", une adresse considérée comme prioritaire à l'issue d'une lecture consécutive sur ce bus étant alors celle qui comporte le plus d'éléments binaires à "O", les informations d'arbitrage relatives au degré de priorité des différents buffers sont établies en conséquence.

Par ailleurs les informations d'arbitrage relatives aux buffers spécialisés pour le trafic en mode paquet comportent, outre une information relative au degré de priorité de ces buffers, une information indiquant l'ancienneté du trafic à écouler.

Ceci peut être obtenu simplement en adjoignant à l'information relative au degré de priorité de ce type de trafic, une information codant l'instant idéal d'accès de la station à l'origine de ce trafic, en l'occurrence, suivant un code comportant le plus d'éléments binaires à "o" pour un instant idéal d'accès le plus ancien.

Le microprocesseur 10 de chacune des stations a en effet connaissance de l'intervalle de temps idéal d'accès de cette station, celui-ci lui étant communiqué par le système centralisé de gestion de ressources 2 via la liaison de synchronisation 3 (figure 1).

Le résultat de l'arbitrage est utilisé par le microprocesseur 10 d'une station pour sélectionner l'adresse du buffer de cette station considéré comme prioritaire à l'issue de l'arbitrage.

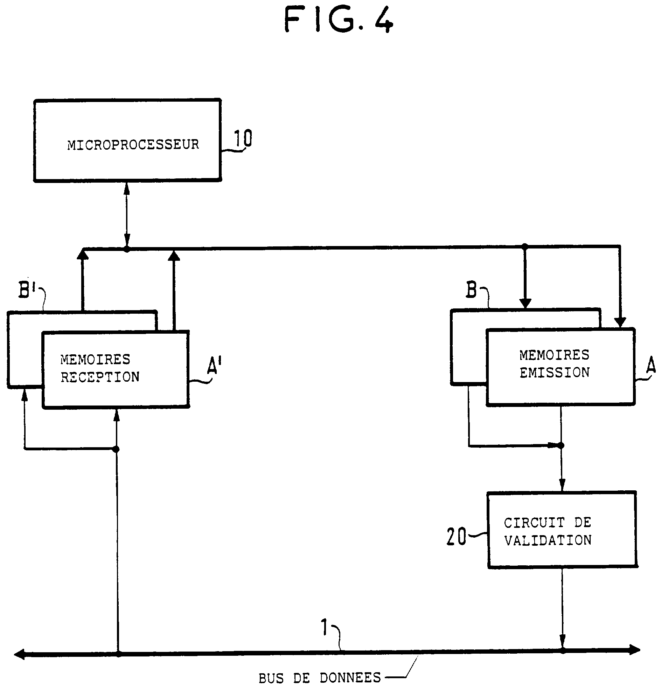

On décrit maintenant, en relation avec la figure 4, l'interface 16 pour l'accès de chaque station au bus de données en écriture (émission) et en lecture (réception), cette interface s'interposant entre le microprocesseur 10 et le bus de données 1 représentés sur la figure 3.

Cette interface est organisée d'une part en un couple de mémoires A-B reservé à l'écriture sur le bus de données, et d'autre part en un couple de mémoires A' - B' réservé à la lecture sur le bus de données. Les données dans ces mémoires sont organisées en octets, des octets successifs sur le bus occupant des adresses successives de ces mémoires.

Chaque couple de mémoire permet une adaptation entre le débit sur le bus de données d'une part, et la vitesse de traitement par le microprocesseur 10, des données à écrire, ou des données lues, sur ce bus, d'autre part.

Ainsi, en écriture sur le bus, pendant que le contenu de l'une de ces mémoires, A par exemple, est "déversé" sur le bus l'autre mémoire, B, est écrite par le microprocesseur, et vice versa, la commutation de ces mémoires étant réalisée à la fréquence des intervalles de temps, chacune de ces mémoires A et B étant en effet dimensionnée pour contenir un intervalle de temps (l'arbitrage réglementant les accès en émission étant en effet, comme on l'a vu plus haut, réalisé à l'échelle de l'intervalle de temps).

Plus précisemment, l'écriture dans chaque station de la mémoire non affectée à l'accès au bus à un intervalle de temps donné se fait, sous la commande du microprocesseur, temps-octet par temps-octet, avec les données stockées dans le registre de la mémoire 12 sélectionné à l'issue des processus d'arbitrage et de validation décrits ci-dessus et à des adresses correspondant aux temps-octets considérés, tandis que la mémoire affectée à l'accès au bus au même intervalle de temps est lue séquentiellement, également sous la commande du microprocesseur, et en synchronisme avec la présentation des temps-octets sur le bus.

Par ailleurs, à chaque adresse de la mémoire non affectée àl'accès au bus, est inscrit, également sous la commande du microprocesseur un neuvième bit, dit de validation d'accès au bus garantissant un accès effectif au bus seulement si le temps-octet correspondant est alloué à cette station à l'issue des processus d'arbitrage et de validation décrits précédemment, ce bit étant lu préalablement àun éventuel accès au bus au temps octet considéré par un circuit 20 de validation d'accès au bus en émission.

De même, en lecture sur le bus, pendant que l'une des mémoires, A' par exemple, accède à ce bus, l'autre mémoire B', est lue par le microprocesseur, et vice versa, la commutation de ces mémoires étant réalisée à la fréquence des intervalles de temps, chacune de ces mémoires étant en effet dimensionnée pour contenir un intervalle de temps qui peut être différent de l'intervalle de temps de réception de la station considérée (la station émettrice en relation avec la station réceptrice considérée ayant en effet un intervalle de temps effectif d'accès qui peut être différent de son intervalle de temps idéal d'accès).

Plus précisément dans la mémoire affectée à l'accès au bus à un intervalle de temps donné sont écrites en séquence toutes les données contenues dans cet intervalle de temps octet par octet, sous la commande du microprocesseur, à des adresses correspondant àla position de ces octets sur le bus de données, à l'intérieur de l'intervalle de temps considéré. Pendant ce temps, la mémoire non affectée à l'accès au bus est lue par le microprocesseur 10, à des adresses sélectionnées comme étant celles correspondant aux temps-octets alloués à la station émettrice correspondante.

Ces temps-octets sont communiqués au microprocesseur, via le bus de données 1, par le système centralisé de gestion de ressources (figure 1) qui traite également les informations de signalisation dans le cas de trafic en mode circuit, suivant des principes bien connus qui ne seront pas redécrits ici.

Dans le cas de trafic en mode paquet, une scrutation en début de paquet permet à chaque station de reconnaître s'il s'agit d'un paquet qui lui est destiné et d'en effectuer la prise en compte pour l'usager concerné.

Les données ainsi lues par le microprocesseur sont stockées dans des registres de la mémoire 12 analogues à ceux définis plus haut pour les accès en écriture.

## Revendications

1. interface (16) pour accès en émission et en réception au support de transmission synchrone d'un réseau de communication réparti, ledit réseau étant architecturé autour d'un support de transmission (1) partagé dans le temps entre différentes stations et chaque station comportant des moyens pour déterminer les positions temporelles correspondant aux données à écrire ou à lire sur ledit support, caractérisée en ce qu'elle comporte dans chaque station, pour chaque sens de transmission, un couple de mémoires (A, B, A', B') dont l'une accède audit support, respectivement en émission et en réception, en synchronisme avec la présentation des positions temporelles sur ledit support, tandis que l'autre est respectivement écrite ou lue, sous la commande desdits moyens de détermination de positions temporelles, et vice versa, et en ce qu'à chaque adresse des mémoires utilisées pour l'accès en émission, ladite adresse correspondant à une position temporelle sur le support de transmission, est stocké un élément binaire supplémentaire pour une validation d'accès audit support, à la position temporelle considérée, cet élément binaire étant écrit sous la commande des moyens de détermination de positions temporelles.

2. Interface selon la revendication 1, caractérisé en ce que, ledit réseau étant apte à commuter des trafics en mode circuit synchrone et en mode paquet synchrone ou asynchrone, ledit support de transmission est structuré en trames (TT) répétitives, elles-mêmes structurées en intervalles de temps (TIT), eux-mêmes structurés en temps-cellules (TTC), ces derniers étant dimensionnés pour contenir une entité de communication qui peut-être suivant le cas une cellule en circuit ou une cellule en paquet segmenté, et les temps-cellules étant eux-mêmes structurés en temps-octets qui constituent lesdites positions temporelles.

3. Interface selon la revendication 2, caractérisé en ce que, un intervalle de temps idéal d'accès en émission au support de transmission en mode paquet étant affecté respectivement aux différentes stations communiquant à l'intérieur de ce réseau, et un temps-octet d'accès au support étant affecté respectivement à différentes stations communiquant en mode circuit, ou à une même station communiquant en mode paquet, à l'intérieur de ce réseau, les moyens pour déterminer lesdites positions temporelles pour un accès en émission comportent :
- des moyens pour réaliser à chaque temps-cellule et pour l'ensemble des stations, un arbitrage d'accès au support de transmission, afin d'assurer un accès à ce support, suivant des priorités décroissantes, par des cellules en circuit disponibles à cet instant dans toute station, par des cellules en paquets segmentés disponibles à cet instant dans toute station ayant un intervalle de temps idéal d'accès antérieur à l'intervalle de temps contenant le temps-cellule considéré, par des cellules en paquets segmentés synchrones disponibles à cet instant dans la station ayant pour intervalle de temps idéal d'accès l'intervalle de temps contenant le temps-cellule considéré, par des cellules en paquets segmentés asynchrones disponibles à cet instant dans toute station ayant un intervalle de temps idéal d'accès antérieur à l'intervalle de temps contenant le temps-cellule considéré, par des cellules en paquets segmentés asynchrones disponibles àcet instant dans la station ayant pour intervalle de temps idéal d'accès l'intervalle de temps contenant le temps-cellule considéré,
- des moyens pour procéder à une validation des stations autorisées, à l'issue dudit arbitrage, à accéder au support de transmission, en fonction des temps-octets qui leur ont été affectés, suivant le type de trafic.

4. Interface selon la revendication 3, caractérisée en ce que les mémoires (A, B) utilisées pour l'accès en émission sont dimensionnées pour contenir un intervalle de temps et sont commutées au rythme de ces intervalles de temps.

5. Interface selon l'une des revendications 3 et 4, caractérisée en ce que les mémoires (A', B') utilisées pour l'accès en réception sont dimensionnées pour contenir un intervalle de temps, et sont commutées au rythme de ces intervalles de temps.

## Patentansprüche

1. Schnittstelle (16) für den Zugang in Sende- und Empfangsrichtung zum synchronen Übertragungsträger eines verteilten Vermittlungsnetzes, wobei das Netz einen im Zeitmultiplex verschiedene Stationen bedienenden Übertragungsträger (1) enthält und jede Station Mittel zur Bestimmung der zeitlichen Lage der auf dem Träger zu schreibenden oder zu lesenden Daten besitzt, dadurch gekennzeichnet, daß sie in jeder Station für jede Übertragungsrichtung ein Paar von Speichern (A, B, A', B') besitzt, von denen jeweils einer in Sendeoder Empfangsrichtung zum Übertragungsträger synchron mit der Präsentation der zeitlichen Lage auf dem Übertragungsträger Zugriff hat, während der jeweils andere unter Steuerung durch die Mittel zur Bestimmung der zeitlichen Lage beschrieben oder gelesen wird und umgekehrt, und daß an jeder Adresse der für den Zugang in Senderichtung verwendeten Speicher, die einer zeitlichen Lage auf dem Übertragungsträger entspricht, ein zusätzliches Binärelement für eine Freigabe des Zugangs zum Träger in der betreffenden Zeitlage gespeichert wird, wobei dieses Binärelement unter Steuerung durch die Mittel zur Bestimmung von zeitlicher Lage eingetragen wird.

2. Schnittstelle nach Anspruch 1, dadurch gekennzeichnet, daß für den Fall, daß das Netz einen Verkehr im synchronen Schaltungsmodus sowie im synchronen oder asynchronen Paketmodus vermitteln kann, der Übertragungsträger in aufeinanderfolgenden Rahmen (TT) strukturiert ist, die ihrerseits in Zeitintervalle (TIT) und diese wiederum in Zellentakte (TTC) unterteilt sind, wobei letztere eine Kapazität für eine Nachrichteneinheit besitzen, die je nachdem eine Zelle im Schaltungsmodus oder eine Zelle im segmentierten Paketmodus sein kann, wobei die Zellentakte ihrerseits in Bytetakte strukturiert sind, die je eine zeitliche Lage darstellen.

3. Schnittstelle nach Anspruch 2, dadurch gekennzeichnet, daß für den Fall, daß ein ideales Zugangszeitintervall zum Übertragungsträger im Paketmodus und in Senderichtung den verschiedenen in diesem Netz miteinander verkehrenden Stationen zugewiesen ist und daß ein Bytetakt für den Zugang zum Träger verschiedenen im Schaltungsmodus verkehrenden Stationen oder einer einzigen im Paketmodus in diesem Netz verkehrenden Station zugewiesen ist, die Mittel zur Bestimmung der zeitlichen Lage für einen Zugang in Senderichtung aufweisen:
- Mittel, um in jedem Zellentakt und für alle Stationen eine Streitschlichtung des Zugangs zum Übertragungsträger durchzuführen, in Hinblick auf einen Zugang zu diesem Träger gemäß abnehmenden Prioritäten für in diesem Augenblick in irgendeiner Station verfügbare Zellen im Schaltungsmodus, für Zellen im segmentierten Paketmodus, die in diesem Augenblick in irgendeiner Station verfügbar sind, deren ideales Zugangszeitintervall älter als das diesen Zellentakt enthaltende Zeitintervall ist, für Zellen im segmentierten synchronen Paketmodus, die in diesem Augenblick in der Station verfügbar sind, deren ideales Zugangszeitintervall das den betreffenden Zellentakt enthaltende Zeitintervall ist, für Zellen im segmentierten asynchronen Paketmodus, die in diesem Augenblick in irgendeiner Station verfügbar sind, deren ideales Zugangszeitintervall älter als das den betreffenden Zellentakt enthaltende Zeitintervall ist, und für Zellen im segmentierten asynchronen Paketmodus, die in diesem Augenblick in der Station verfügbar sind, deren ideales Zugangszeitintervall das den betreffenden Zellentakt enthaltende Zeitintervall ist,
- Mittel, um eine Freigabe der am Ende des Streitschlich-tungsprozesses ausgewählten Stationen für den Zugang zum Übertragungsträger abhängig von den ihnen zugeordneten Bytetakten je nach der Art des Verkehrs durchzuführen.

4. Schnittstelle nach Anspruch 3, dadurch gekennzeichnet, daß die für den Zugang in Senderichtung verwendeten Speicher (A, B) eine ausreichende Kapazität für ein Zeitintervall besitzen und im Rhythmus dieser Zeitintervalle umgeschaltet werden.

5. Schnittstelle nach einem der Ansprüche 3 und 4, dadurch gekennzeichnet, daß die für den Zugang in Empfangsrichtung verwendeten Speicher (A', B') eine Kapazität für ein Zeitintervall besitzen und im Rhythmus dieser Zeitintervalle umgeschaltet werden.

## Claims

1. Interface (16) for transmit and receive mode access to the synchronous transmission medium of a distributed switching network, the architecture of said network being based on a transmission medium (1) time-shared between stations and each station comprising means for determining the time positions corresponding to data to write to or to read from said medium, characterised in that it comprises in each station, for each transmission direction, a pair of memories (A, B, A', B') of which one respectively accesses said medium in transmit mode and in receive mode synchronously with the presentation of the time positions to said medium while the other is respectively written or read under the control of said time position determining means, and vice versa, and in that at each address of the memories used for transmit mode access, said address corresponding to a time position on the transmission medium, there is stored an additional bit to enable access to said medium at the time position in question, said bit being written under the control of the time position determining means.

2. Interface according to claim 1 characterised in that, said network being adapted to switch traffic in synchronous circuit-switched mode and in synchronous or asynchronous packet-switched mode, said transmission medium is structured in repetitive frames (T_{T}) in turn structured in time slots (T_{IT}) in turn structured in time cells (T_{TC}), the latter being sized to contain a communication entity which can be either a circuit-switched cell or a segmented packet-switched cell, and the time cells are in turn structured in time bytes which constitute said time positions.

3. Interface according to claim 2 characterised in that, an ideal time slot for transmit mode access to the transmission medium in packet-switched mode being assigned to the respective stations communicating within the network, and a medium access time byte being assigned to respective stations communicating in circuit-switched mode or to one and the same station communicating in packet-switched mode within the network, the means for determining said time positions for transmit mode access comprise:
- means whereby in each time cell and for all stations transmission medium access arbitration is applied to procure access to this medium, in decreasing priority order, to circuit-switched cells available at this time in any station, to segmented packet-switched cells available at this time in any station having an ideal access time slot anterior to the time slot containing the time cell in question, to synchronous segmented packet-switched cells available at this time in the station having as its ideal access time slot the time slot containing the time cell in question, to asynchronous segmented packet-switched cells available at this time in any station having for its ideal access time slot a time slot anterior to the time slot containing the time cell in question, and to asynchronous segmented packet-switched cells available at this time in the station having for its ideal access time slot the time slot containing the time cell in question, and
- means for enabling stations authorised after arbitration to access the transmission medium according to the time bytes assigned to them according to the type of traffic.

4. Interface according to claim 3 characterised in that the memories (A, B) used for transmit mode access are sized to contain a time slot and are switched at the time slot frequency.

5. Interface according to claim 3 or claim 4 characterised in that the memories (A', B') used for receive mode access are sized to contain a time slot and are switched at the time slot frequency.
